(19) Europäisches Patentamt European Patent Office Office européen des brevets

(11) **EP 4 614 993 A1**

(12) **EUROPEAN PATENT APPLICATION**

(43) Date of publication:
**10.09.2025 Bulletin 2025/37**

(21) Application number: **24162349.5**

(22) Date of filing: **08.03.2024**

(51) International Patent Classification (IPC):
**H04N 23/67** (2023.01)

(52) Cooperative Patent Classification (CPC):
**H04N 23/671; G06F 3/0304; H04N 23/672; H04N 23/673**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Freshape SA**
**1020 Renens (CH)**

(72) Inventors:
• **KINTZINGER, Julien**
**1020 Renens (CH)**
• **GUÉRIN, Guillaume**
**1020 Renens (CH)**
• **UNUCHEK, Dmitrii**
**1020 Renens (CH)**

(74) Representative: **ABREMA SA**
**Avenue du Théâtre 16**
**1005 Lausanne (CH)**

(54) **METHOD OF ADJUSTING A FOCUSING DISTANCE OF AN OPTICAL SENSING SYSTEM**

(57) There is described a method of adjusting a focusing distance of an optical sensing system (OS) with respect to a surface (S) to be imaged by an optical sensor (C) of the optical sensing system (OS). The method comprises setting (420) an initial focusing distance of the optical sensing system (OS). The method further comprises acquiring (430) an image of the surface (S) using the optical sensor (C), processing (470) the image acquired by the optical sensor (C) to extract a distance-related metric therefrom and derive an estimate of the distance separating the optical sensor (C) from the surface (S) based on the distance-related metric, and adjusting (420) the focusing distance of the optical sensing system (OS) based on the thus derived estimate of the distance. Processing (470) the acquired image additionally relies on positional measurements (460) provided by positional sensors (PS), which positional measurements (460) are indicative of a pose or change of pose of the optical sensor (C) with respect to the surface (S). Processing (470) may especially include sensor fusion to provide a fast output indicative of the pose of the optical sensor (C) and thus of the focusing distance.

Fig. 3B

**Description**

TECHNICAL FIELD

The present invention generally relates to a method of adjusting a focusing distance of an optical sensing system with respect to a surface to be imaged by an optical sensor of the optical sensing system, also referred to as an autofocus methodology.

BACKGROUND OF THE INVENTION

Autofocus methods and algorithms are known as such in the art. The goal of an autofocus algorithm is to determine the best set of optical parameters for an optical sensor (or camera) to acquire sharp images. Traditional approaches use either distance sensors to provide an actual estimation of the focusing distance and/or a set of images to maximize image sharpness and adjust the focusing distance accordingly.

Autofocus algorithms are generally applied in digital cameras as well as in various imaging systems likewise including an optical sensor configured to acquire images, including but not limited to digital pen or stylus devices.

Optical pen or stylus devices are known as such in the art, for instance from U.S. Patent Publication No. US 2010/0085471 A1 and International (PCT) Publications Nos. WO 2022/064412 A1 and WO 2024/003638 A1.

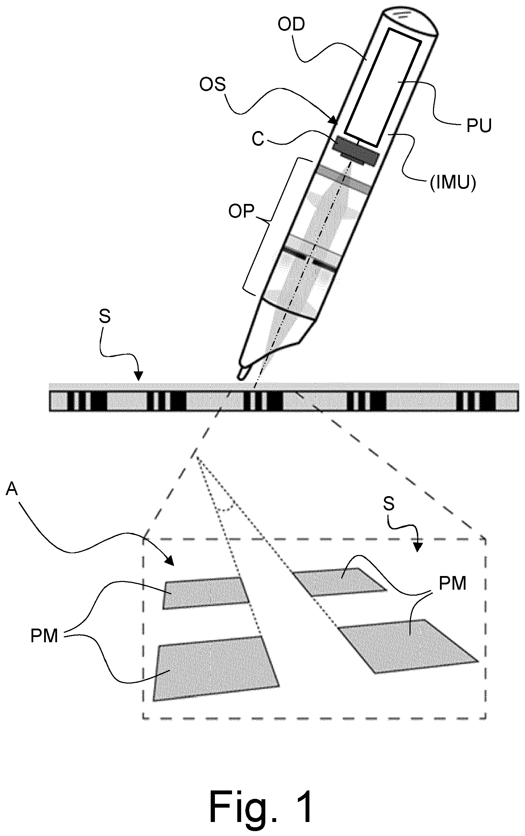

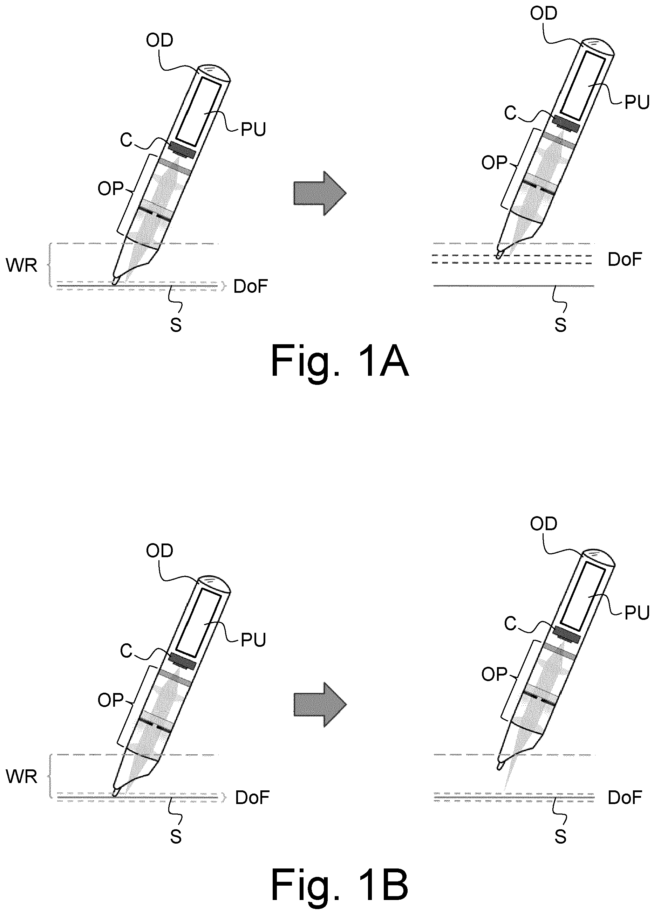

Figure 1 is a schematic depiction of an optical stylus device OD as for instance disclosed in International (PCT) Publication No. WO 2022/064412 A1, the disclosure of which is incorporated herein by reference in its entirety. The optical stylus device OD shown in Figure 1 essentially comprises an optical sensing system OS, including an optical sensor (also referred to as a camera) C that is aimed at a target surface S, and a dedicated processing system PU to process images acquired by the optical sensor C and provide an estimation of the pose (i.e. the position and orientation in space) of the optical stylus device OD with respect to the target surface S over which the optical stylus device OD is moved. In the illustrated example, the target surface S is provided with a plurality of positional markers PM, such as two-dimensional codes (including but not limited to data matrices), that are distributed over the target surface S e.g. in the form of an array A of individual, spaced-apart codes. The relevant positional markers PM shown schematically in Figure 1 encode data as to their position over the target surface S, and a selected subset of such positional markers PM, visible in the image acquired by the optical sensor C,3e are processed, namely decoded, by the optical stylus device OD to estimate a pose thereof in space and, especially, a position in space of a tip of the optical stylus device OD. In effect, the optical stylus OD is not only capable of determining a position of the tip of the optical stylus device OD on the target surface S, but also over and at a distance from the target surface S. In other words, the optical stylus device OD may be used to capture movements and strokes in space performed by a user by means of the optical stylus device OD and convert those in 2D or 3D positional data for e.g. further processing in a computer environment. The optical stylus device OD can in particular be used to perform conversion of the user's handwriting or of any other shape or pattern drawn in space by the user by means of the optical stylus device OD.

In this particular context, estimation of the pose of the optical stylus device OD is commonly referred to as a Perspective-*n*-Point (PnP) problem involving an estimation of the pose in space of the optical sensor C (and thus of the optical stylus device OD) given a set of n points in space and their corresponding projections in the images acquired by the optical sensor C.

In order to reliably estimate the pose of the optical stylus device OD with respect to the surface S, the optical sensor C should acquire sufficiently sharp images of the surface S in order to be able to decode the positional markers PM provided on the surface S, which necessitates adjustment of the focusing distance of the optical sensing system OS. To this end, optics OP of the optical stylus device OD is typically equipped with a dynamic optical element (such as e.g. a so-called liquid lens) that allows dynamic adjustment of the focusing distance of the optical sensing system OS.

By way of illustration, the depth of field, referred to as DoF in Figures 1A and 1B, of the optical stylus device OD is typically within a few millimetres, whereas its working range WR is at the centimetres scale. Hence, if the optics OP of the optical stylus device OD is not driven properly, the optical sensing system OS may get out of focus and not anymore be in a position to acquire sharp enough images within all of the working range WR (as schematically illustrated in Figure 1A). As a consequence, the image-based positioning algorithm may not be able to decode the positional markers PM provided on the surface S. It is important to stress that, in this particular context, without the image-based positioning algorithm, key functions of the optical stylus device OD, such as 2D/3D writing, would not anymore be operational or only with degraded accuracy.

It is therefore important to dynamically reconfigure the optics OP of the optical stylus device OD so that the acquired image remains sharp enough for the image-based positioning algorithm to reliably decode the positional markers PM, meaning that the focusing distance of the optical sensing system OS must be adjusted sufficiently frequently to ensure that the depth of field DoF substantially coincides with the actual distance separating the optical sensor C from the surface S being imaged, as schematically illustrated in Figure 1B. Another constraint is that the adjustment of the focusing distance of the camera C should happen fast enough to take into account motion of the optical stylus device OD itself in-between the acquisition of two successive images to avoid acquiring out-of-focus images, which becomes a challenge as processing of the acquired images inherently takes some processing time.

In theory, in order to properly convert user's inputs into a representative stream of positional data, one would require an optical sensor C having a fast sampling rate and a processing system PU with enough processing power to provide pose estimations of the optical stylus device OD at a sufficient rate for writing (i.e. of the order of 100 Hz to 200 Hz). However, for various reasons, this is not achievable in practice in a small-sized, handheld optical positioning device, such as the aforementioned optical stylus device OD, due e.g. to constraints in terms of costs, energy consumption requirements, and limitations in terms of packaging size.

One solution is therefore to use an optical sensing system with a lower sampling rate to provide absolute measurement samples of the estimation of the pose of the optical stylus device and add e.g. an inertial measurement unit (not shown in Figure 1 but generally identified by reference sign IMU) to provide a relative estimation of the change in the pose of the optical stylus device OD, with respect to the most recent absolute estimation thereof, until a subsequent absolute estimation of the pose of the optical stylus device OD can be delivered. The inertial measurement unit IMU in effect measures 3D acceleration and 3D rotation rate of the optical stylus device at a higher sampling rate, typically of the order of few kHz, and a sensor fusion algorithm can be used to combine the pose estimated by means of the optical sensing system OS and the inertial measurements coming from the inertial measurement unit IMU.

A fast enough method of adjusting the focusing distance of the optical sensing system OS is therefore desirable.

In most traditional cameras and imaging devices having reconfigurable optics, the depth of field of the optical sensor is much smaller than the working range, i.e. the range of distances for which the device must be capable of providing in-focus images, as exemplified above with reference to Figures 1A and 1B. Reconfiguring the optics consists in changing its focal length to focus at a different distance from the optical sensor. Most often, this is achieved by moving some of the optical elements composing the optics using motors like linear voice coil motors (VCM) or actuators (VCA). More recently, reconfigurable lenses, such as liquid lenses, have been proposed to allow a dynamic change of the optical properties through the application of an electrical voltage or current to change the focal length of the optics (see e.g. paper titled *"Electrically Tunable Lenses: A Review"*, Leihao Chen et al., SYSTEMATIC REVIEW, Frontiers in Robotics and AI, Section Robot Vision and Artificial Perception, Volume 8, Article 678046, pp. 1-20, June 9, 2021 - https://doi.org/10.3389/frobt.2021.678046 - referred to herein as **[Chen2021]**).

Additional sensors or measurements are typically used to drive the refocusing process.

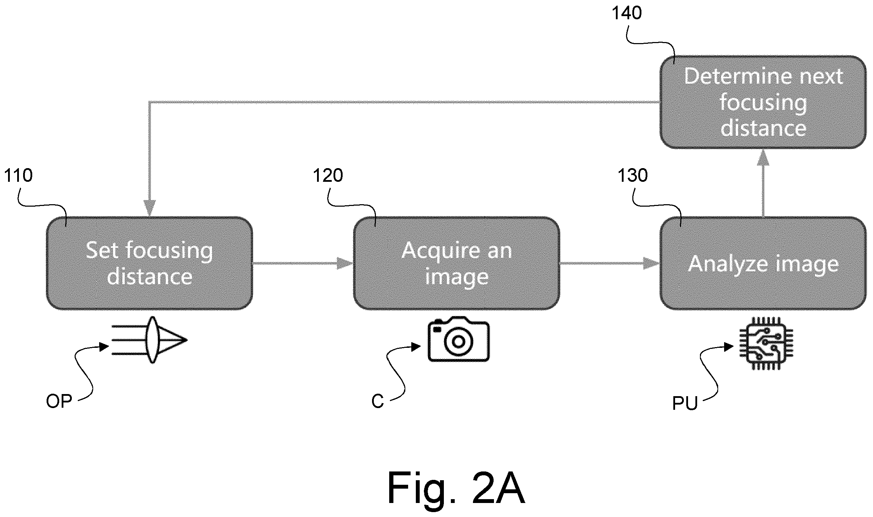

Figure 2A is a schematic diagram illustrating a so-called "closed-loop autofocus", also sometimes referred to as image-based autofocus, or more specifically as Contrast Detection Auto Focus (CD AF) (see e.g. paper titled *"Autofocus System and Evaluation Methodologies: A Literature Review"*, Yupeng Zhang et al., Sensors and Materials, Volume 30, Number 5, MYU Tokyo, pp. 1165-1174, May 31, 2018 - https://doi.org/10.18494/SAM.2018.1785-referred to herein as **[Zhang2018]**). It uses a given set of optical parameters to initially set the focusing distance of the optics OP (step 110), and an image acquired by the camera C (step 120) as input for image analysis by the associated processing system PU (step 130). Image analysis involves computing some image quality metrics (step 140) on the input image (e.g. contrast, gradient, and/or any meaningful metric indicative of a quality of the image) and iterative maximisation of this image quality metric for the next set of acquired images (hence the closed loop). One known approach consists in using a search algorithm to define the parameters for the next iteration. It therefore relies on an iteration of several image acquisitions until the algorithm converges towards a sharp image.

The advantages of this method are the accuracy and precision of the focus, and the guarantee that it always converges toward a sharp image. The disadvantages are mainly the number of iterations (which leads to a slow convergence time) and the computational requirements to process the images.

This method is historically the most commonly used in photography. It has been used for a very long time in most of the single-lens reflex (SLR) and digital SLR (DSLR) cameras, as well as on smartphone cameras until some more advanced sensors allowed novel techniques to be implemented.

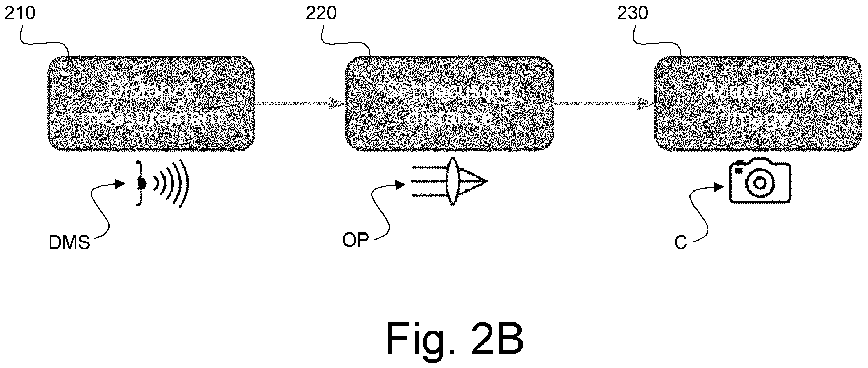

Figure 2B is a schematic diagram illustrating a so-called "open loop autofocus", also sometimes referred to more specifically as Phase Detection Auto Focus (PD AF). It relies on the use of one or more distance measuring sensors DMS to estimate the distance separating the optical sensor from the surface to be imaged (step 210). Given the measured distance, the optical sensing system is able to reconfigure the optics OP thereof and to focus to the appropriate distance (step 220) in order for the camera C to acquire the desired image (step 230). The most common distance measuring sensor DMS used in this context is a Time-of-Flight (ToF) sensor (see e.g. paper titled *"Time-of-Flight Camera - An Introduction"*, Larry Li, Technical White Paper SLOA190B, 2014-https://www.academia.edu/download/47210132/Time-of-Flight%20Camera%20-%20An%20Introduction.pdf - referred to herein as **[Li2014]**), but other distance measuring sensors could be contemplated. For instance SLR/DSLR cameras and some consumer cameras use PD AF technology embedded into the image sensor, which does not require the use of an external sensor to measure distance (see e.g. *"Autofocus à correlation de phase"*, Wikipedia, L'encyclopédie libre, https://fr.wikipedia.org/wiki/Autofocus %C3%A0 corr%C3%A9lation de phase, and *"Autofocus: phase detection"*, Marc Levoy, Stanford Computer Graphics Laboratory, Courses in Graphics CS 178 Digital Photography, February 2012, https://graphics.stanford.edu/courses/cs178/applets/autofocusPD.html).

The advantages of this method are mainly the speed and the ease of development, integration and validation. On the other hand, the main disadvantages are the relatively low accuracy and precision, as well as a lack of correction control. Indeed, there is no actual measure of image sharpness, so nothing guarantees that the image will be sharp enough if the measurement is wrong. This drawback becomes even more critical for applications with a very narrow depth of field (e.g. in the millimetre range) as the estimation of the focusing distance must be very accurate.

Phase detection-based autofocus has been in use in the SLR/DSLR industry since the 70's using bulky techniques like beam splitting and the addition of a dedicated sensor. Since PD AF sensors have become available on the market, this autofocus methodology has progressively replaced the closed-loop autofocus methodology especially for application in smartphones.

Some approaches also mix open-loop and closed-loop autofocus methodologies into a hybrid autofocus algorithm to leverage the benefits from both methodologies. A hybrid autofocus algorithm combining CD AF and PD AF has for instance been implemented by Sony in its "Fast Hybrid AF" system (see "What is Fast Hybrid AF", Article ID: 00064937, October 2010, https://www.sony.com.sg/electronics/support/articles/00020823).

There however remains a need for a fast and reliable autofocus methodology, especially for applications requiring a particularly precise and accurate adjustment of the focusing distance in a dynamic environment.

SUMMARY OF THE INVENTION

A general aim of the invention is to provide a method of adjusting a focusing distance of an optical sensing system that obviates the shortcomings and limitations of the known solutions of the prior art.

More specifically, an aim of the present invention is to provide such a method that may advantageously rely on the implementation of a combined, hybrid autofocus methodology that is further improved to cope with a particularly dynamic environment where a pose of the optical sensor with respect to the surface to be imaged changes rapidly.

A further aim of the invention is to provide such a solution that can adequately be implemented for the purpose, especially, of adjusting the focusing distance of the optical sensing system of a digital pen or stylus device.

These aims, and others, are achieved thanks to the solutions defined in the claims.

There is accordingly provided a method of adjusting a focusing distance of an optical sensing system with respect to a surface to be imaged by an optical sensor of the optical sensing system, the features of which are recited in claim 1, the method comprising the following steps:

(a) setting an initial focusing distance of the optical sensing system;
(b) acquiring an image of the surface using the optical sensor;
(c) processing the image acquired by the optical sensor to extract a distance-related metric therefrom and derive an estimate of the distance separating the optical sensor from the surface based on the distance-related metric; and
(d) adjusting the focusing distance of the optical sensing system based on the estimate of the distance derived at step (c).

According to the invention, step (c) additionally relies on positional measurements provided by positional sensors, which positional measurements are indicative of a pose or change of pose of the optical sensor with respect to the surface.

The distance-related metric is to be distinguished from the image quality metric used e.g. as part of the traditional closed-loop autofocus methodology and may especially be a metric indicative of field of view, magnification, focusing distance, or any positional parameter related to the pose of the optical sensor with respect to the surface.

In accordance with an embodiment of the invention, the method further comprising the initial step of measuring the distance between the optical sensor and the surface using a distance measuring sensor, such as a Time-of-Flight (ToF) sensor, in which case step (a) includes setting the initial focusing distance of the optical sensing system based on the distance measured by the distance measuring sensor.

In this latter context, the method may further comprise the steps of newly measuring the distance between the optical sensor and the surface using the distance measuring sensor and readjusting the focusing distance of the optical sensing system based on the distance newly measured by the distance measuring sensor in the event the image acquired at step (b) is too blurry for processing at step (c).

In accordance with a particularly preferred embodiment, the method further comprises the following steps:

(e) processing the image acquired by the optical sensor to extract at least one image quality metric therefrom;
(f) determining a new focusing distance of the optical sensing system;
(g) readjusting the focusing distance of the optical sensing system based on the new focusing distance determined at step (f);

(h) acquiring a new image of the surface using the optical sensor; and

(i) repeating steps (e) to (h) until the at least one image quality metric extracted at step (e) is indicative of an in-focus image suitable for processing at step (c).

The image quality metric may especially be a metric indicative of image sharpness, contrast, entropy, noise, signal to noise ratio, grey level, etc..

By way of preference, a range of focusing distances for steps (f) and (g) may be constrained by a measurement of the distance between the optical sensor and the surface provided by a distance measuring sensor, such as a Time-of-Flight (ToF) sensor. Such range will especially be related to the value of the measured distance, as well as the accuracy and precision of the measurement.

In the latter case, the resulting autofocus methodology would likewise leverage the benefits from the open-loop and closed-loop autofocus methodologies discussed in the preamble hereof, supplemented by a position-based autofocus methodology relying not only on the images acquired by the optical sensor, but also on the positional measurements provided by the positional sensors that are indicative of the pose or the change of pose of the optical sensor with respect to the surface to be imaged.

Contrary to the traditional autofocus methodologies discussed in the preamble hereof, the invention can provide a fast, accurate and reliable estimation of the distance separating the optical sensor and surface to be imaged so as to perform adjustment of the focusing distance of the optical sensing system even in a very dynamic environment where the pose of the optical sensor rapidly changes between successive image acquisitions.

Steps (f) to (h) may be repeated in accordance with any one of the following procedures:

(i) acquiring a set of images at different focusing distances in accordance with a predetermined adjustment sequence and selecting the focusing distance that yields the best image quality metric; and

(ii) acquiring images at different focusing distances and comparing the image quality metric extracted from the last acquired image with the image quality metric extracted from a previous acquired image until an optimum is reached.

In accordance with a further preferred variant, the method involves switching between a first state during which the focusing distance of the optical sensing system is determined and adjusted exclusively on the basis of the image quality metric extracted at step (e) and a second state during which the focusing distance of the optical sensing system is derived and adjusted on the basis of the distance-related metric extracted at step (c). In this latter case, switching between the first and second states preferably takes place depending on whether the distance-related metric can be extracted at step (c).

Steps (a) to (c) may be repeated in order to accommodate any change in distance between the optical sensor and the surface.

By way of preference, processing of the image acquired by the optical sensor and of the positional measurements at step (c) includes:

(c1) carrying out an estimation of a pose of the optical sensor with respect to the surface on the basis of the image acquired by the optical sensor;

(c2) carrying out an estimation of a change in the pose of the optical sensor on the basis of the positional measurements provided by the positional sensors; and

(c3) performing sensor fusion based on the estimation of the pose of the optical sensor carried out at step (c1) and on the estimation of the change in the pose of the optical sensor carried out at step (c2) to provide a fused output indicative of the pose of the optical sensor,

in which case the focusing distance for adjustment at step (d) is extracted from the fused output indicative of the pose of the optical sensor provided at step (c3).

The estimation of the change in the pose of the optical sensor may especially be carried out at step (c2) based on inertial measurements.

Advantageously, the estimation of the pose of the optical sensor may in particular be carried out at step (c1) at a first frequency $F_1$, while the estimation of the change in the pose of the optical sensor may be carried out at step (c2) at a second frequency $F_2$ higher than the first frequency $F_1$, in which case the fused output indicative of the pose of the optical sensor is provided at step (c3) at the second frequency $F_2$, thus allowing to derive a fast estimation of the focusing distance despite the comparatively lower frequency at which the image-based estimation of the pose of the optical sensor is carried out.

The sensor fusion performed at step (c3) may be based on an Extended Kalman Filter (EKF), especially a Multiplicative Extended Kalman Filter (MEKF).

In a particular application scenario, the surface is provided with positional markers that are visible to the optical sensor and the estimation of the pose of the optical sensor with respect to the surface carried out at step (c1) is determined by resolving a Perspective-n-Point (PnP) problem based on the image acquired by the optical sensor.

The distance between the optical sensor and the surface may especially be measured based on Time-of-Flight (ToF) using a dedicated ToF distance measuring sensor.

The positional measurements may in particular be inertial measurements indicative of a change of pose of the optical sensor.

The method of the invention may advantageously be applied for the purpose of adjusting the focusing distance of the optical sensing system of a digital pen or stylus device.

Also claimed is an optical sensing system comprising an optical sensor configured to acquire images of at least a portion of a surface, positional sensors to provide positional measurements indicative of a pose or change of pose of the optical sensor with respect to the surface, and a processing system configured to process the images acquired by the optical sensor and the positional measurements provided by the positional sensors, the processing system being configured to adjust the focusing distance of the optical sensing system in accordance with the method of the invention.

The optical sensing system may further comprise a distance measuring sensor to provide a measurement of the distance separating the optical sensor from the surface. Such distance measuring sensor may in particular be a Time-of-Flight (ToF) sensor. The positional sensors may include an inertial measurement unit providing inertial measurements indicative of a change of pose of the optical sensor.

Further claimed is a digital pen or stylus device comprising the aforementioned optical sensing system, for use in connection with a target surface that is provided with a plurality of positional markers that are distributed over the target surface and are visible to the optical sensor, wherein the processing system is configured to adjust the focusing distance of the optical sensing system in accordance with the method of the invention involving determination of the estimation of the pose of the optical sensor with respect to the target surface by resolving a Perspective-n-Point (PnP) problem based on the image acquired by the optical sensor.

Further advantageous embodiments of the invention are discussed below.

BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:

Figure 1 is a schematic illustration of an optical stylus or pen device that may embody the invention in accordance with a preferred application scenario;

Figure 1A is illustrative of a situation where the optical stylus or pen device is moved away from the surface and causes the optical sensor thereof to lose focus;

Figure 1B is illustrative of a situation where the optical stylus or pen device is moved away from the surface and the focusing distance of the optical sensing system thereof is adjusted to maintain focus on the surface;

Figure 2A is a schematic diagram illustrating a known autofocus methodology that is commonly referred to as closed-loop autofocus;

Figure 2B is a schematic diagram illustrating a known autofocus methodology that is commonly referred to as open-loop autofocus;

Figure 3A is a state diagram schematically illustrating a preferred embodiment of the invention in which the autofocus methodology is switched between two states; and

Figure 3B is a schematic diagram illustrating a particularly preferred embodiment of the invention involving sensor fusion of data from different sensor sources, namely images acquired by the optical sensor and positional measurements provided by positional sensors, to output a fast estimation of the distance separating the optical sensor from the surface that is used to adjust the focusing distance.

DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as defined by the appended claims.

The invention will be described in the particular context of an application scenario relying on the use of an optical stylus device OD as shown in Figure 1 and already discussed in the preamble hereof. One may again refer to the disclosure of International (PCT) Publication No. WO 2022/064412 A1, which is incorporated herein by reference in its entirety. The invention is however applicable more generally to any other application leveraging image-based positioning as described below. The invention may for instance be applied as part of any positioning or navigational system relying on the use of image data and positional data, such as visual-inertial navigation systems for aircrafts, UAVs, autonomous or semi-autonomous vehicles, exploration robots, and the like.

The invention is in particular applicable in a context where the target surface S over which the optical pen or stylus device OD is moved is provided with positional markers PM, as shown schematically in Figure 1, that are visible to the optical sensing system OS. In such case, the estimation of the pose of the optical sensor C with respect to the target surface S is determined by resolving a Perspective-n-Point (PnP) problem based on images acquired by the optical sensor C, as discussed in International (PCT) Publication No. WO 2022/064412 A1. Further aspects that are of relevance in that regard may be found in European patent application No. 23159950.7 of March 3, 2023, titled "METHOD OF DETECTING AND PROCESSING SPATIALLY-DISTRIBUTED TWO-DIMENSIONAL MARKERS AND OPTICAL PEN OR STYLUS DEVICE EMBODYING THE SAME", in the name of the present Applicant.

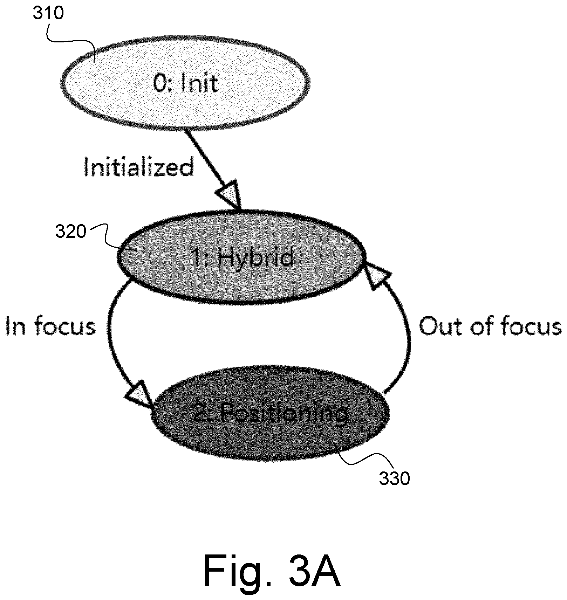

Figure 3A is a state diagram schematically illustrating a preferred embodiment of the invention which mixes the open-loop and closed-loop autofocus methodologies referred to in the preamble hereof into a hybrid autofocus algorithm (as schematically designated as state 320 in Figure 3A), which is supplemented by a positioning algorithm (as schematically designated as state 330 in Figure 3A). The state machine shown in Figure 3A in essence has three states 310, 320, 330, namely an initial state 310 during which the device (in this case an optical pen or stylus device OD as shown in Figure 1) is initialized with a given set of parameters, and the two further states 320 and 330 between which the device OD is switched depending on whether the device OD is assumed to be in focus or out of focus.

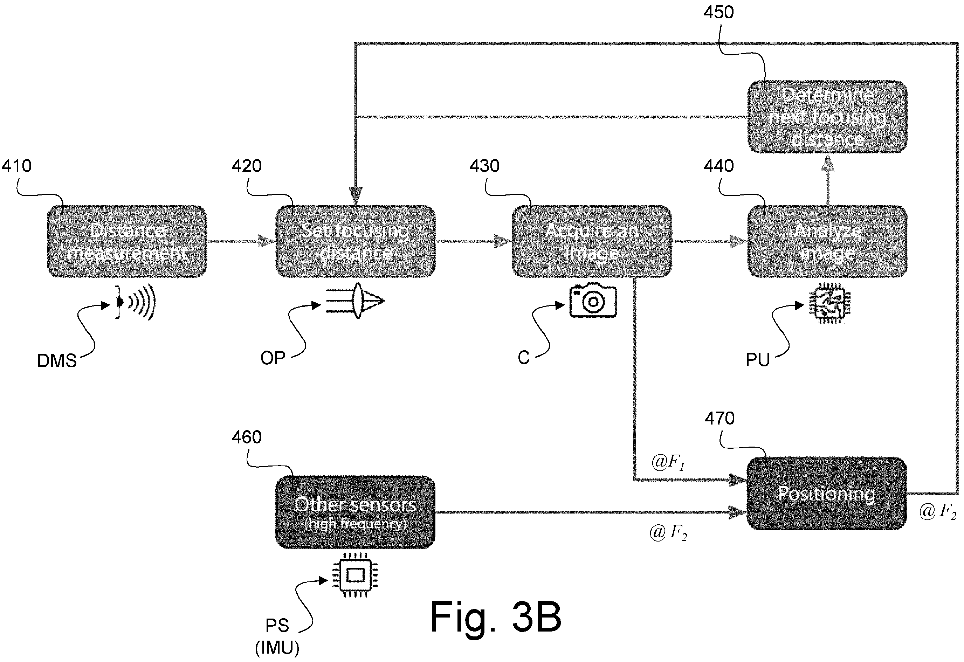

While not specifically shown, one will accordingly understand that state 320 in Figure 3A in essence merges the two autofocus methodologies of Figures 2A and 2B, combining steps 110 and 220, as well as 120 and 230 into corresponding setting and image acquisition steps 110/220 and 120/230, respectively (see also steps 410, 420, 430, 440 and 450 in the preferred embodiment of Figure 3B, which respectively correspond to steps 210, 110/220, 120/230, 130 and 140 of Figures 2A and 2B).

When initially switching from state 310 to state 320 (also referred to as "hybrid" state), the device OD is assumed to have no information about the distance separating the optical sensor C and the surface S. In this state 320, the hybrid autofocus algorithm first uses a distance measuring sensor DMS, for instance a Time-of-Flight (ToF) sensor, to measure a rough estimate of the distance to the target surface S (similarly to the open-loop autofocus discussed with reference to Figure 2B - step 210), which rough estimate is used to initially set the focusing distance (equivalent to merged steps 110/220 of Figures 2A-B) and acquire the first image (equivalent to merged steps 120/230 of Figures 2A-B). The accuracy and precision of this rough estimate will set up boundaries for the closed-loop image-based autofocus algorithm (equivalent to steps 130 and 140 of Figure 2A). As the search range of the image-based autofocus algorithm is smaller (thanks to the rough estimate provided by the distance measuring sensor DMS), less iterations will be necessary for the autofocus algorithm to converge toward the best optical parameters.

One will appreciate that, in cases where the distance measuring sensor DMS is accurate enough, the image-based autofocus algorithm becomes optional and may potentially be omitted. In other words, in accordance with a variant of the invention, state 320 could in effect be reduced to a traditional open-loop autofocus algorithm. In such case, the distance measuring sensor DMS can directly set the focusing distance of the optical sensing system OS.

According to the invention, the use of a distance measuring sensor DMS is however optional and could potentially be omitted entirely. Indeed, one could alternatively contemplate to initially set up the system during initial state 310 by setting an initial focusing distance based on predetermined conditions, which may require a specific initialisation procedure. For instance, the optical sensing system OS of the device OD could be initialized with a predetermined focusing distance specifically corresponding to a state in which the tip of the optical pen or stylus device OD is brought in contact with the surface S. In such case, no distance measuring device would be required as the focusing distance can be preset to correspond to a predetermined distance based on the known dimensions and configuration of the optical pen or stylus device OD.

It is worth noting that, for the particular use case being described, the positioning algorithm (identified as state 330 in Figure 3A) does not necessarily require the acquired image to be perfectly sharp, but to be sharp enough to enable positioning.

Once state 320 has converged and the image is sharp enough to run the positioning algorithm, device OD may be switched to state 330 (also referred to as "positioning" state) in which focus will be adjusted based on an estimation of the pose of the optical sensor C with respect to the surface S. In this state 330, the focusing distance of the optical sensing system OS will be set by the positioning algorithm, likewise creating a closed loop. The positioning algorithm relies on different sensory sources to allow a fast update of the estimated focusing distance. If, for any reason, positioning becomes inaccurate or unreliable (due e.g. to a drift on pose estimate, too fast movement, partial image occlusion, etc.), focus will be lost. Consequently, the autofocus algorithm will switch back from state 330 to state 320 to recover focus.

As discussed in the preamble hereof, a solution to circumvent inherent constraints relating to pure image-based pose estimation is to use an optical sensing system OS with a relatively low sampling rate, to deliver absolute measurement samples of the estimation of the pose of the optical stylus device OD at a first frequency and to provide e.g. an inertial measurement unit IMU to carry out inertial measurements representative of a change in the pose of the optical stylus device OD and deliver corresponding relative measurement samples at a second frequency higher than the first frequency.

In such case a sensor fusion algorithm may advantageously be implemented to combine the absolute measurement samples and the relative measurement samples to provide a fused output representative of the estimation of the pose of the optical stylus device. A suitable sensor fusion methodology separately forms the subject-matter of European patent application No. 24161026.0 of March 1st, 2024, titled "METHOD OF ESTIMATING A STATE OF A SYSTEM BASED ON SENSOR FUSION OF ASYNCHRONOUS SENSOR DATA", in the name of the present Applicant. Also of relevance in that regard is the pose-estimation methodology that separately forms the subject-matter of European patent application No. 24161016.1 of March 1st, 2024, titled "METHOD OF ESTIMATING A POSE OF AN OPTICAL POSITIONING DEVICE, SUCH AS A DIGITAL PEN OR STYLUS DEVICE", also in the name of the present Applicant.

In the context of the present invention, it suffices to understand that the relevant sensor fusion methodology may especially involve estimating the state of the system (i.e. the pose of the optical stylus device OD) based on sensor fusion of asynchronous sensor data delivered at distinct frequencies, namely absolute measurement samples (i.e. an estimation of the pose of the optical stylus device OD based on the images acquired by the optical sensor) that are delivered at a first frequency $F_1$ and relative measurement samples (i.e. positional measurements provided by positional sensors such as inertial measurements delivered by the aforementioned inertial measurement unit IMU) that are delivered at a second frequency $F_2$ higher than the first frequency $F_1$. It is to be understood that frequency $F_1$ accounts both for image acquisition and processing, and that image processing in effect constitutes the bottleneck in the relevant data path of the absolute measurement samples that are delivered to the sensor fusion algorithm. On the other hand, the relative measurement samples can be delivered to the sensor fusion algorithm at a much higher frequency $F_2$ to provide an estimation of the pose of the optical stylus device OD during the time between the delivery of two successive absolute measurement samples. Thanks to this sensor fusion methodology, a current estimation of the pose of the optical stylus device OD may be provided at a high frequency (namely at the second frequency $F_2$) and with minimal output latency despite the inherent time delay between the absolute and relative measurement samples and the asynchronous nature of the sensor data.

Figure 3B is a schematic diagram illustrating a particularly preferred embodiment of the invention involving sensor fusion of data from different sensor sources, namely images acquired by the optical sensor C and positional measurements provided by positional sensors PS, to output a fast estimation of the distance separating the optical sensor C from the surface S that is then used to adjust the focusing distance of the optical sensing system OS. This allows a fast reconfiguration of the focusing distance of the optical sensing system OS that guarantees that the subsequent image can be acquired in focus even if the optical stylus device OD moves in-between two successive image-based pose estimations. Upon delivery of the next image-based pose estimation, a new absolute measurement sample is provided as input for the sensor fusion algorithm, which counterbalances any short-term drift in the relative measurement samples provided by the positional sensors PS. Hence, the sensor fusion algorithm provides a fused output representative of the pose of the optical stylus device OD that can be used to adjust the focusing distance of the optical sensing system OS, creating a virtuous feedback loop.

Steps 410, 420, 430, 440 and 450 correspond to the aforementioned steps carried out as part of the first, hybrid state 320 of Figure 3A to which the autofocus algorithm is switched following initialization. Steps 460 and 470 illustrate the supplemental steps that are carried out in accordance with the invention to run the positioning algorithm that is carried out upon switching to the second, positioning state 330 of Figure 3A.

More precisely, in the schematic diagram of Figure 3B, the positioning algorithm 470 is responsible for providing the best estimate of the focusing distance depending on sensor fusion of (i) an image-based estimation of the pose of the optical stylus device OD and (ii) positional information indicative of a change in the pose of the optical stylus device OD as provided by the positional sensors PS. In the particular use case being described, the positioning algorithm 470 includes:

- carrying out an estimation of a pose of the optical sensor C with respect to the surface S on the basis of the image acquired by the optical sensor C at a first frequency $F_1$;
- carrying out an estimation of a change in the pose of the optical sensor C on the basis of positional measurements provided by the positional sensors PS at a second frequency $F_2$ higher than the first frequency $F_1$; and
- performing sensor fusion based on the estimation of the pose of the optical sensor C and on the estimation of the change in the pose of the optical sensor C to provide a fused output indicative of the pose of the optical sensor C at the second frequency $F_2$.

The image-based estimation of the pose of the optical sensor C with respect to the surface is preferably carried out by resolving a Perspective-n-Point (PnP) problem based on the image acquired by the optical sensor C, namely by identifying and decoding the positional markers PM visible in the image acquired by the optical sensor C. This provides a slow (i.e. at frequency $F_1$) but accurate positioning of the optical sensor C and thus of the optical stylus device OD, allowing to reach sub-millimetric accuracy on the pose estimation.

The positional measurements provided by the positional sensors PS are preferably inertial measurements delivered by an adequate inertial measurement unit IMU, which positional measurements are provided at higher frequency (i.e. at frequency $F_2$). Inertial measurements delivered by the inertial measurement unit IMU are inherently noisy, but allow to derive a high rate estimate of the change in the pose of the optical sensor C that will slowly drift over time.

The fusion algorithm 470 fuses data coming from the image-based pose estimation and the inertial measurement unit IMU to provide a fast and accurate estimation of the pose of the optical sensor C, from which an adequate focusing distance can be derived. Let us consider the case of a Multiplicative Extended Kalman Filter (MEKF) for fusing image-based pose estimations with other sensor measurements (such as the aforementioned inertial measurements delivered by the inertial measurement unit IMU), the general description of which can be found in "Optimal State Estimation: Kalman, H∞, and Nonlinear Approaches", D. Simon, Chapter 13 "Nonlinear Kalman filtering", pp. 395-431, John Wiley & Sons, Inc., 2006, ISBN: 978-0-471-70858-2 - https://doi.org/10.1002/0470045345.ch13 referred herein as **[Simon2006].** Applying the measurement model with entirely decorrelated noise terms as discussed in European patent application No. 24161016.1 of March 1st, 2024 mentioned above, the Jacobian matrix **M,** including the derivatives of the relevant measurement model function **h**() with respect to the applicable noise terms $\eta_\theta$, $\eta_{px}$ and $\eta_d$ can be reduced to an identity matrix due to the decorrelated and additive measurement noise terms:

$$\mathbf{M} = \begin{bmatrix} \frac{\partial \mathbf{h}}{\partial \eta_\theta} & 0 & 0 \\ 0 & \frac{\partial \mathbf{h}}{\partial \eta_{px}} & 0 \\ 0 & 0 & \frac{\partial \mathbf{h}}{\partial \eta_d} \end{bmatrix} = \begin{bmatrix} 1 & 0 & 0 \\ 0 & 1 & 0 \\ 0 & 0 & 1 \end{bmatrix} \qquad (1)$$

The aforementioned measurement model therefore allows reduction of estimated pose inaccuracy related to the ambiguity between camera translation and orientations, one of the main challenges faced with the traditional measurement models, and further simplifies the required computation for pose estimation.

Various modifications and/or improvements may be made to the above-described embodiments without departing from the scope of the invention as defined by the appended claims.

For instance, while the invention has been described in the particular context of an application scenario of an optical pen or stylus device, the invention is in effect applicable as part of any positioning or navigational system relying on the use of image data and positional data, such as visual-inertial navigation systems for aircrafts, UAVs, autonomous or semi-autonomous vehicles, exploration robots, and the like.

Furthermore, while a reference has been made above to the concepts that separately form the subject-matter of European patent applications No. 24161016.1 and 24161026.0, the sensor fusion methodology could potentially be implemented in any other adequate way without departing from the scope of the appended claims, depending on the particular requirements of the relevant application being contemplated.

LIST OF REFERENCE NUMERALS AND SIGNS USED THEREIN

OD      optical pen or stylus device (optical positioning device)
OS      optical sensing system
OP      optics of optical sensing system OS with dynamically adjustable focusing distance
C      optical sensor / camera
PU      processing system
PM      positional markers (e.g. two-dimensional codes such as data matrices)
A      array of positional markers PM distributed over surface S
S      target surface over which optical pen or stylus device OD is moved
PS      positional sensor(s) providing positional measurements indicative of a pose or change of pose of optical sensor C with respect to surface S
IMU      inertial measurement unit
$F_1$      (first) frequency at which the optical sensing system OS is operated to deliver absolute measurement samples
$F_2$      (second) frequency at which the inertial measurement unit IMU is operated to deliver relative measurement samples
WR      working range of optical pen or stylus device OD
DoF      depth of field of optical sensor C
110      setting of focusing distance (closed-loop autofocus)

120    image acquisition / input for image analysis 130 (closed-loop autofocus)

130    image analysis (closed-loop autofocus)

140    iterative determination of focusing distance based on image analysis 130 (closed-loop autofocus)

210    distance measurement (open-loop autofocus)

220    setting of focusing distance (open-loop autofocus)

230    image acquisition (open-loop autofocus)

310    initialization state

320    first autofocus state ("hybrid state")

330    second autofocus state ("positioning state")

410    distance measurement (hybrid autofocus)

420    setting of focusing distance (hybrid autofocus)

430    image acquisition / input for image analysis 440 (hybrid autofocus) / first sensory input for positioning 470 (image-based positioning)

440    image analysis (hybrid autofocus)

450    iterative determination of focusing distance based on image analysis 440 (hybrid autofocus)

460    positional measurements / second sensory input for positioning 470

470    positional estimation (positioning algorithm) / sensor fusion

## Claims

1. A method of adjusting a focusing distance of an optical sensing system (OS) with respect to a surface (S) to be imaged by an optical sensor (C) of the optical sensing system (OS), comprising the following steps:

   (a) setting (420) an initial focusing distance of the optical sensing system (OS);
   (b) acquiring (430) an image of the surface (S) using the optical sensor (C);
   (c) processing (470) the image acquired by the optical sensor (C) to extract a distance-related metric therefrom and derive an estimate of the distance separating the optical sensor (C) from the surface (S) based on the distance-related metric; and
   (d) adjusting (420) the focusing distance of the optical sensing system (OS) based on the estimate of the distance derived at step (c);

   wherein step (c) additionally relies on positional measurements (460) provided by positional sensors (PS), which positional measurements (460) are indicative of a pose or change of pose of the optical sensor (C) with respect to the surface (S).

2. The method according to claim 1, further comprising the initial step of measuring (410) the distance between the optical sensor (C) and the surface (S) using a distance measuring sensor (DMS), such as a Time-of-Flight (ToF) sensor,
   wherein step (a) includes setting the initial focusing distance of the optical sensing system (OS) based on the distance measured by the distance measuring sensor (DMS).

3. The method according to claim 2, further comprising the steps of newly measuring (410) the distance between the optical sensor (C) and the surface (S) using the distance measuring sensor (DMS) and readjusting (420) the focusing distance of the optical sensing system (OS) based on the distance newly measured by the distance measuring sensor (DMS) in the event the image acquired at step (b) is too blurry for processing at step (c).

4. The method according to any one of the preceding claims, further comprising the following steps:

   (e) processing (440) the image acquired by the optical sensor (C) to extract at least one image quality metric therefrom;
   (f) determining (450) a new focusing distance of the optical sensing system (OS);
   (g) readjusting (420) the focusing distance of the optical sensing system (OS) based on the new focusing distance determined at step (f);
   (h) acquiring (430) a new image of the surface (S) using the optical sensor (C); and
   (i) repeating steps (e) to (h) until the at least one image quality metric extracted at step (e) is indicative of an in-focus image suitable for processing at step (c),

   wherein a range of focusing distances for steps (f) and (g) is preferably constrained by a measurement of the distance between the optical sensor (C) and the surface (S) provided by a distance measuring sensor (DMS), such as a Time-of-Flight (ToF) sensor.

5. The method according to claim 4, wherein steps (f) to (h) are repeated in accordance with any one of the following procedures:

(i) acquiring a set of images at different focusing distances in accordance with a predetermined adjustment sequence and selecting the focusing distance that yields the best image quality metric; and
(ii) acquiring images at different focusing distances and comparing the image quality metric extracted from the last acquired image with the image quality metric extracted from a previous acquired image until an optimum is reached.

6. The method according to claim 4 or 5, involving switching between a first state (320) during which the focusing distance of the optical sensing system (OS) is determined and adjusted exclusively on the basis of the image quality metric extracted at step (e) and a second state (330) during which the focusing distance of the sensing system (OS) is derived and adjusted on the basis of the distance-related metric extracted at step (c),
and wherein switching between the first and second states (320, 330) preferably takes place depending on whether the distance-related metric can be extracted at step (c).

7. The method according to any one of the preceding claims, wherein steps (a) to (c) are repeated in order to accommodate any change in distance between the optical sensor (C) and the surface (S).

8. The method according to any one of the preceding claims, wherein processing (470) of the image acquired by the optical sensor (C) and of the positional measurements (460) at step (c) includes:

(c1) carrying out an estimation of a pose of the optical sensor (C) with respect to the surface (S) on the basis of the image acquired by the optical sensor (C);
(c2) carrying out an estimation of a change in the pose of the optical sensor (C) on the basis of the positional measurements (460) provided by the positional sensors (PS); and
(c3) performing sensor fusion (470) based on the estimation of the pose of the optical sensor (C) carried out at step (c1) and on the estimation of the change in the pose of the optical sensor (C) carried out at step (c2) to provide a fused output indicative of the pose of the optical sensor (C),
wherein the focusing distance for adjustment (420) at step (d) is extracted from the fused output indicative of the pose of the optical sensor (C) provided at step (c3),
and wherein the estimation of the change in the pose of the optical sensor (C) carried out at step (c2) is preferably based on inertial measurements (460).

9. The method of claim 8, wherein the estimation of the pose of the optical sensor (C) is carried out at step (c1) at a first frequency $F_1$,

wherein the estimation of the change in the pose of the optical sensor (C) is carried out at step (c2) at a second frequency $F_2$ higher than the first frequency $F_1$,
and wherein the fused output indicative of the pose of the optical sensor (C) is provided at step (c3) at the second frequency $F_2$.

10. The method according to claim 8 or 9, wherein sensor fusion (470) performed at step (c3) is based on an Extended Kalman Filter (EKF).

11. The method according to any one of claims 8 to 10, wherein the surface (S) is provided with positional markers (PM) that are visible to the optical sensor (C) and wherein the estimation of the pose of the optical sensor (C) with respect to the surface (S) carried out at step (c1) is determined by resolving a Perspective-n-Point (PnP) problem based on the image acquired by the optical sensor (C).

12. The method according to any one of the preceding claims, wherein the distance between the optical sensor (C) and the surface (S) is measured based on Time-of-Flight (ToF), and/or
wherein the positional measurements (460) are inertial measurements indicative of a change of pose of the optical sensor (C).

13. The method according to any one of the preceding claims, applied for the purpose of adjusting the focusing distance of the optical sensing system (OS) of a digital pen or stylus device (OD).

14. An optical sensing system (OS) comprising:

- an optical sensor (C) configured to acquire images of at least a portion of a surface (S);
- positional sensors (PS) to provide positional measurements (460) indicative of a pose or change of pose of the optical sensor (C) with respect to the surface (S); and
- a processing system (PU) configured to process the images acquired by the optical sensor (C) and the positional measurements (460) provided by the positional sensors (PS),

wherein the processing system (PU) is configured to adjust the focusing distance of the optical sensing system (OS) in accordance with the method of any one of claims 1 to 12,
wherein the optical sensing system (OS) preferably further comprises a distance measuring sensor (DMS), such as a Time-of-Flight (ToF) sensor, to provide a measurement (410) of the distance separating the optical sensor (C) from the surface (S),
and wherein the positional sensors (PS) preferentially include an inertial measurement unit (IMU) providing inertial measurements (460) indicative of a change of pose of the optical sensor (C)..

15. A digital pen or stylus device (OD) comprising an optical sensing system (OS) in accordance with claim 14, for use in connection with a target surface (S) that is provided with a plurality of positional markers (PM) that are distributed over the target surface (S),
and wherein the processing system (PU) is configured to adjust the focusing distance of the optical sensing system (OS) in accordance with the method of claim 11.

# Fig. 1

Fig. 1A

Fig. 1B

110 Set focusing distance

OP

120 Acquire an image

C

130 Analyze image

PU

140 Determine next focusing distance

Fig. 2A

Fig. 2B

Fig. 3A

Fig. 3B

| | Europäisches Patentamt European Patent Office Office européen des brevets | **EUROPEAN SEARCH REPORT** | **Application Number** EP 24 16 2349 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br><br>A | US 2017/318226 A1 (JUNG BYUNGWOOK [KR] ET AL) 2 November 2017 (2017-11-02)<br>* paragraph [0190] - paragraph [0196] *<br>* figures 5A-5C *<br>----- | 1,3,4,6,<br>7,14<br>2,12,13,<br>15<br>5,8-11 | INV.<br>H04N23/67 |
| Y | WO 2023/075255 A1 (SAMSUNG ELECTRONICS CO LTD [KR]) 4 May 2023 (2023-05-04)<br>* the whole document *<br>& EP 4 390 450 A1 (SAMSUNG ELECTRONICS CO LTD [KR]) 26 June 2024 (2024-06-26)<br>* paragraph [0044] *<br>----- | 2,12 | |
| Y | US 2010/085471 A1 (CRAVEN-BARTLE THOMAS [SE]) 8 April 2010 (2010-04-08)<br>* paragraph [0005] *<br>* paragraph [0117] *<br>* figure 2 *<br>----- | 13,15 | |
| A | US 2023/168379 A1 (YUN JUHWAN [KR] ET AL) 1 June 2023 (2023-06-01)<br>* paragraph [0055] - paragraph [0153] *<br>* figures 3-11 *<br>----- | 1-15 | TECHNICAL FIELDS SEARCHED (IPC)<br><br>H04N |

The present search report has been drawn up for all claims

| Place of search | Date of completion of the search | Examiner |
|---|---|---|
| The Hague | 31 July 2024 | Didierlaurent, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 614 993 A1

## ANNEX TO THE EUROPEAN SEARCH REPORT
## ON EUROPEAN PATENT APPLICATION NO.

EP 24 16 2349

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | | Publication date |
|---|---|---|---|---|
| US 2017318226 A1 | 02-11-2017 | CN | 107343081 A | 10-11-2017 |
| | | EP | 3240282 A2 | 01-11-2017 |
| | | KR | 20170123125 A | 07-11-2017 |
| | | US | 2017318226 A1 | 02-11-2017 |
| WO 2023075255 A1 | 04-05-2023 | CN | 118176435 A | 11-06-2024 |
| | | EP | 4390450 A1 | 26-06-2024 |
| | | KR | 20230058992 A | 03-05-2023 |
| | | US | 2023168379 A1 | 01-06-2023 |
| | | WO | 2023075255 A1 | 04-05-2023 |
| US 2010085471 A1 | 08-04-2010 | CN | 101681431 A | 24-03-2010 |
| | | EP | 2143040 A2 | 13-01-2010 |
| | | JP | 5203448 B2 | 05-06-2013 |
| | | JP | 2010523043 A | 08-07-2010 |
| | | KR | 20100016020 A | 12-02-2010 |
| | | US | 2010085471 A1 | 08-04-2010 |
| | | WO | 2008118085 A2 | 02-10-2008 |
| US 2023168379 A1 | 01-06-2023 | CN | 118176435 A | 11-06-2024 |
| | | EP | 4390450 A1 | 26-06-2024 |
| | | KR | 20230058992 A | 03-05-2023 |
| | | US | 2023168379 A1 | 01-06-2023 |
| | | WO | 2023075255 A1 | 04-05-2023 |

EPO FORM P0459

For more details about this annex : see Official Journal of the European Patent Office, No. 12/82

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100085471 A1
- WO 2022064412 A1
- WO 2024003638 A1
- EP 23159950
- EP 24161026
- EP 24161016

### Non-patent literature cited in the description

- **LEIHAO CHEN et al.** Electrically Tunable Lenses: A Review. *SYSTEMATIC REVIEW, Frontiers in Robotics and AI, Section Robot Vision and Artificial Perception*, 09 June 2021, vol. 8, 1-20, https://doi.org/10.3389/frobt.2021.678046
- **YUPENG ZHANG et al.** Autofocus System and Evaluation Methodologies: A Literature Review. *Sensors and Materials*, 31 May 2018, vol. 30 (5), 1165-1174, https://doi.org/10.18494/-SAM.2018.1785-
- **LARRY LI**. Time-of-Flight Camera - An Introduction. *Technical White Paper SLOA190B*, 2014, https://www.academia.edu/download/47210132/-Time-of-Flight%20Camera%20-%20An%20Introduction.pdf
- Autofocus à correlation de phase. *Wikipedia, L'encyclopédie libre*, https://fr.wikipedia.org/wiki/Autofocus %C3%A0 corr%C3%A9lation de phase
- **MARC LEVOY**. Autofocus: phase detection. *Stanford Computer Graphics Laboratory, Courses in Graphics CS 178 Digital Photography*, February 2012, https://graphics.stanford.edu/courses/c-s178/applets/autofocusPD.html
- *What is Fast Hybrid AF*, October 2010, https://www.sony.com.sg/electronics/support/articles/00020823
- Optimal State Estimation: Kalman, H∞, and Nonlinear Approaches. **D. SIMON**. Nonlinear Kalman filtering''. John Wiley & Sons, Inc., 2006, 395-431